# EUROPÄISCHE PATENTSCHRIFT

(11) **EP 2 764 767 B1**
(45) Veröffentlichungstag und Bekanntmachung des Hinweises auf die Patenterteilung: **28.03.2018**
(21) Anmeldenummer: 13196917.2
(22) Anmeldetag: 12.12.2013
(51) Int. Cl.: A01F 29/14, A01D 43/08, A01F 29/22

(54) **Landwirtschaftliche Erntemaschine, insbesondere Feldhäcksler**
Agricultural harvester, in particular chaff cutter
Moissonneuse, notamment ramasseuse-hâcheuse

(30) Priorität: 07.02.2013 DE 102013101183
(43) Veröffentlichungstag der Anmeldung: 13.08.2014
(73) Patentinhaber: CLAAS Selbstfahrende Erntemaschinen GmbH, 33428 Harsewinkel (DE)
(72) Erfinder: Pollklas, Manfred, 33378 Rheda-Wiedenbrück (DE)

(56) Entgegenhaltungen:
- EP-A1- 1 174 021
- DE-B- 1 146 301
- US-A- 4 934 612

## Beschreibung

Die Erfindung betrifft eine landwirtschaftliche Erntemaschine, insbesondere einen Feldhäcksler gemäß dem Oberbegriff des Anspruchs 1.

Im Betrieb einer landwirtschaftlichen Erntemaschine wie insbesondere eines Feldhäckslers sind im Rahmen des Ernteeinsatzes am Häckselaggregat wiederholt verschiedene Instandhaltungsmaßnahmen durchzuführen, um die Qualität des Häckselprozesses aufrechtzuerhalten. Denn der laufend am eintretenden Erntegut durchgeführte Schneidprozess verursacht Verschleiß an den Häckselmessern sowie an der Gegenschneide des Häckselaggregats. Das Häckseln mit stumpfen Messern und/oder mit einer - aus unterschiedlichen Gründen - ungenau eingestellten Gegenschneide führt wiederum zu einer schlechteren Häckselqualität sowie zu einem erhöhten Energieverbrauch beim Antrieb des Häckselaggregats.

Es besteht daher allgemein bekannt eine Notwendigkeit, Instandhaltungsmaßnahmen am Häckselaggregat durchzuführen, welche insbesondere die Schärfung der Messer und/oder die präzise Einstellung der Gegenschneide zum Erhalt eines geeigneten Schneidspalts umfassen.

Beide der genannten Instandhaltungsvorgänge finden gemäß praxisüblichen Verfahren bei laufender Häckseltrommel statt. Zum Schleifen fährt ein Schleifstein parallel zur Drehachse der (rotierenden) Häckseltrommel entlang der Häckselmesser mittels eines Schleifschlittens und wird dabei radial gegen die Häckselmesser vorgespannt, um gegenüber den Messern eine Schleifkraft aufzubringen. Verwiesen sei in diesem Zusammenhang beispielsweise auf die DE 41 28 483 A1 oder die EP 1 174 021 A1. Aus der EP 1 174 021 A1 ist es bekannt, die Drehgeschwindigkeit der Häckseltrommel, die Verfahrgeschwindigkeit und Zustellung des Schleifsteins zu variieren, so dass zunächst ein Grobschleifen zur Wiederherstellung der Sollform der Messer und anschließend ein Feinschleifen erfolgt.

Aus der US 4,934,612 sowie der DE 11 46 301 B sind rotierende, mit Messern bestückte Zerkleinerungsaggregate bekannt, deren Drehzahl während eines Instandhaltungsvorganges zum Schleifen der Messer durch eine Einrichtung veränderbar ist.

Zur Erzielung unterschiedlicher Schnittlängen, zum Einsatz bei unterschiedlichen Erntefruchtarten und/oder aus sonstigen Gründen ist es üblich, die Häckseltrommel mit unterschiedlicher Messerzahl zu bestücken oder unterschiedliche Typen von Häckseltrommeln einzusetzen, die beispielsweise voneinander abweichende Anzahlen von Messeraufnahmen (und damit unterschiedliche Messeranzahlen) aufweisen. Hinsichtlich durchzuführender Schleifvorgänge wächst mit zunehmendem Abstand aufeinanderfolgender Messer - sei es bedingt durch die Bauart der Häckseltrommel und/oder durch die Messerbestückung - die Gefahr, dass der radial gegen die Häckseltrommel vorgespannte Schleifstein in die Zwischenräume (Lücken) zwischen den Messern springt. Dieses Springen verursacht starke Schwingungen, die sich zudem in laut hörbaren unangenehmen Geräuschen äußern und weiterhin zu vorzeitigem Verschleiß zumindest der Messer und der Schleifeinrichtung führen.

Daneben ist es zur Beibehaltung einer guten Häckselqualität und zur Vermeidung von erhöhtem Kraftstoffverbrauch erforderlich, den Abstand zwischen Gegenschneide und rotierender Häckseltrommel stets auf ein genaues Maß einzustellen. Dies erfolgt auf für sich gesehen bekannte Weise, wozu beispielsweise auf die EP 0 291 216 A verwiesen sei, im Rahmen eines Einstellvorgangs durch schrittweise seitlich abwechselndes Heranfahren der Gegenschneide an die rotierende Häckseltrommel, bis an der Gegenschneide angebrachte sogenannte Klopfsensoren einen Kontakt der Gegenschneide mit den vorbeibewegten Messern erfassen. Aufgrund der bei diesem Einstellprozess genutzten Sensorik sowie der sonstigen Umgebungsbedingungen enthalten die auszuwertenden Signale der Klopfsensoren einen hohen Rauschanteil. Insbesondere wenn Häckseltrommeln mit unterschiedlicher Messerzahl bestückt sind und/oder unterschiedliche Typen von Messertrommeln verwendet werden, ist es für eine zum Einsatz kommende Auswerteelektronik schwierig, aus den spannungsniedrigen, verrauschten Signalen einzelne Messer zu erkennen. Durch Rauschen hervorgerufene Spannungsausschläge können so leicht fehlinterpretiert werden, indem diese einem möglicherweise gar nicht vorhandenen Messer zugeordnet werden. In der Praxis verstärkt sich dieses Problem, da eine immer größere Bandbreite an Trommeln bzw. Anzahlen von Messern eingesetzt werden und die Klopfsensoren somit zeitlich sehr unterschiedlich aufgelöstes Klopfen erfassen müssen.

Es ist daher eine Aufgabe der vorliegenden Erfindung, eine landwirtschaftliche Erntemaschine der genannten Art anzugeben, mit der sich an der laufenden Häckseltrommel vorzunehmende Instandhaltungsvorgänge besser vornehmen lassen. Insbesondere soll dies für verschiedene Konfigurationen des Häckselaggregats möglich sein.

Die Aufgabe wird gelöst durch eine Erntemaschine gemäß den Merkmalen des Anspruchs 1. Diese zeichnet sich aus durch eine Einrichtung zur Steuerung der Drehzahl der Trommel zumindest während eines Instandhaltungsvorgangs des Zerkleinerungsaggregats abhängig von einer Eigenschaft der Trommel, wobei es sich bei der Eigenschaft der Trommel um deren Bestückungszustand mit Messern handelt. Demnach ist zumindest während des Instandhaltungsvorgangs die Drehzahl der Trommel mittels einer Steuereinrichtung beeinflussbar, so dass unter Berücksichtigung der Eigenschaften der jeweils zum Einsatz kommenden Trommel der Instandhaltungsvorgang in geeigneter Weise durchgeführt werden kann. Da sich gezeigt hat, dass durch eine Beeinflussung der Drehzahl für verschiedene Instandhaltungsvorgänge Vorteile erzielen lassen, wird die zuvor genannte Aufgabe damit gelöst.

Grundsätzlich handelt es sich bei einer Eigenschaft der Trommel um jedwede den Instandhaltungsvorgang beeinflussende Größe. Zweckmäßigerweise handelt es sich bei der Eigenschaft der Trommel um deren Bestückungszustand mit Messern, d.h. insbesondere die Anzahl der an der Trommel angeordneten Messer. Weiterhin kann der Bestückungszustand weitere Informationen z.B. über die Art der Bestückung (Anordnung der Messer in mehreren Reihen, Beabstandung der Messer, Montagewinkel der Messer, Messertyp etc.) beinhalten. Daneben kann es sich bei einer Eigenschaft der Trommel allgemein um deren Bauart handeln.

Gemäß einer weiteren vorteilhaften Ausgestaltung kann es sich bei einer Eigenschaft der Trommel um deren Eigenfrequenzen handeln. Eine Berücksichtigung der Eigenfrequenzen der Trommel bietet den Vorteil, dass die Trommeldrehzahl während des Instandhaltungsvorgangs in Lücken zwischen den Eigenfrequenzen gelegt werden kann, wodurch nachteilige Vibrationen aufgrund von Eigenschwingungen wesentlich reduziert werden.

Eine vorteilhafte Weiterbildung der Erntemaschine sieht als allgemein vorteilhaftes Prinzip vor, dass bei dem Instandhaltungsvorgang eine Trommel mit größerem Abstand aufeinanderfolgender Messer mit einer höheren Drehzahl in Rotation versetzt wird als eine Trommel mit demgegenüber geringerem Abstand aufeinanderfolgender Messer. Auf diese Weise lässt sich vorteilhaft auch für unterschiedliche Messerbestückungen eine etwa gleich bleibende Messerfrequenz (Anzahl passierender Messer pro Zeiteinheit) gegenüber einem ruhenden Werkzeug (Schleifeinrichtung, Gegenschneide) erreichen.

Die erfindungsgemäß vorgesehene Drehzahlsteuerung wird bevorzugt für Instandhaltungsvorgänge genutzt, welche die Betätigung eines der Trommel zugeordneten Werkzeugs umfassen.

Bei einem solchen Werkzeug kann es sich um eine Schleifeinrichtung für die Messer der Trommel handeln. Auf vorteilhafte Weise kann dann die Drehzahl der Trommel so gewählt werden, dass zwischen aufeinanderfolgenden Messern möglicherweise durch Messerlücken entstehende Kontaktunterbrechungen zwischen Schleifstein und Messer von so kurzer Dauer sind, dass ein radiales Springen des Schleifsteins in diese Messerlücken verhindert wird. Dies wird insbesondere dadurch erreicht, dass für eine mit weniger Messern bestückte Trommel eine höhere Drehzahl gewählt wird als für eine mit demgegenüber mehr Messern bestückte Trommel. Durch die vorgesehene Drehzahlanpassung läuft der Schleifvorgang damit insbesondere bei weniger bestückten Trommeln deutlich schwingungsärmer ab. Neben reduzierten Schwingungen und damit Geräuschen wird durch die beschriebene Drehzahlanpassung ein besseres, insbesondere gleichmäßigeres Schleifergebnis erzielt.

Im Rahmen der Nutzung der Drehzahlsteuerung für einen Schleifvorgang kann weiterhin vorteilhaft vorgesehen sein, dass die für den Schleifvorgang gewählte Drehzahl der Trommel zudem abhängig vom Nutzungszustand der Messer angepasst wird. So könnte beispielsweise während des Schleifens neuer Messer (unbenutzt) eine andere Drehzahl genutzt werden als während des Schleifens bereits abgenutzter Messer. Da abgenutzte Messer in der Regel kürzer sind als neue Messer, weist eine mit abgenutzten Messern bestückte Trommel längere Messerlücken auf. Dementsprechend könnte eine solche Trommel zweckmäßigerweise mit einer erhöhten Drehzahl geschliffen werden, um so die längeren Messerlücken zu kompensieren und das nachteilige radiale Springen des Schleifsteins zu vermeiden.

Alternativ oder ergänzend kann es sich bei dem Werkzeug um eine Einrichtung zum Einstellen des Abstands der Gegenschneide gegenüber der Trommel handeln. Derartige Gegenschneidstelleinrichtungen basieren üblicherweise auf der Technik des langsamen schrittweisen Heranfahrens der Gegenschneide an die rotierende Trommel bis über Schwingungssensoren (sogenannten "Klopfsensoren") ein Anschlagen der Messer an die Gegenschneide erkannt wird. Da die Messsignale der Klopfsensoren in der Regel starkem Rauschen unterliegen, ist die für den Einstellprozess nötige Auswertung der Signale schwierig. Werden unterschiedliche Trommeln und/oder Trommeln mit unterschiedlicher Messerbestückung eingesetzt, ist eine Zuordnung der Messsignale zu erfolgten Messerkontakten nochmals deutlich erschwert. Zur Erleichterung der Signalauswertung ist es daher vorteilhaft, beim Vorgang der Einstellung der Gegenschneide die Drehzahl der Trommel so zu wählen, dass sich an der Gegenschneide für unterschiedliche Messerbestückungen und/oder Trommeltypen eine etwa gleiche erfassbare Klopffrequenz ergibt. Demnach dreht die Trommel beispielsweise bei halber Messerzahl doppelt so schnell wie bei voller Messerzahl, um sicherzustellen, dass die Klopfsensoren jeweils eine gleiche Anschlagfrequenz erfassen. Die Auswertung der Signale lässt sich dann auch für unterschiedliche Trommelbestückungen jeweils auf die gleiche Weise, insbesondere mit einem gleichen Datenauswertungsprogramm vornehmen.

Gemäß einer vorteilhaften Weiterbildung der Erfindung zeichnet sich die Erntemaschine weiterhin aus durch eine Einrichtung, die betreibbar ist, bei einer bekannten Drehzahl der Trommel anhand einer durch Messer verursachten Klopffrequenz die Anzahl der an der Trommel angebrachten Messer zu ermitteln, um diese für einen - wie zuvor beschriebenen - Instandhaltungsvorgang verfügbar zu machen. Vorteilhaft ist damit eine Möglichkeit geschaffen, die an der Trommel vorhandene Messeranzahl maschinell zu ermitteln. Eine (alternativ) manuelle Eingabe der Messerzahl durch einen Bediener erübrigt sich in diesem Fall.

Die Erfindung wird im Folgenden anhand von drei Figuren näher erläutert. Daraus ergeben sich auch weitere vorteilhafte Effekte und Wirkungen. Es zeigen:
- Fig. 1: einen selbstfahrenden Feldhäcksler in schematischer Seitenansicht,
- Fig. 2: eine Prinzipdarstellung eines Häckselaggregats in Seitenansicht, dessen Häckseltrommel mit einer ersten Anzahl von Messern bestückt ist,
- Fig. 3: eine Häckseltrommel, bestückt mit einer zweiten Anzahl von Messern.

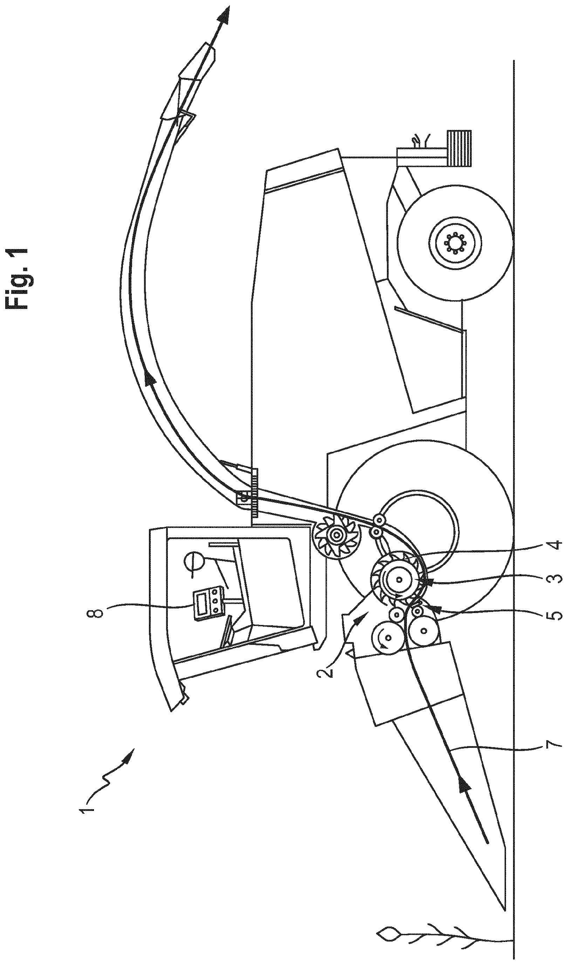

In Fig. 1 ist eine landwirtschaftliche Erntemaschine in Form eines selbstfahrenden Feldhäckslers 1 dargestellt. Der Feldhäcksler 1 weist auf für sich bekannte - und daher nicht im Einzelnen zu erläuternde - Weise übliche Merkmale eines Feldhäckslers auf. Im Erntebetrieb wird der Feldhäcksler 1 insbesondere dazu eingesetzt, aufgenommenes Erntegut 7, das in Form eines vorgepressten Erntegutstrangs einem Häckselaggregat 2 zugeführt wird, zu zerkleinern ("häckseln"), um es anschließend aus dem Feldhäcksler 1 auf ein (nicht gezeigtes) Transportfahrzeug auszuwerfen. Der Weg des Ernteguts 4 durch den Feldhäcksler 1 ist in Fig. 1 durch eine mit Pfeilen versehene Linie dargestellt.

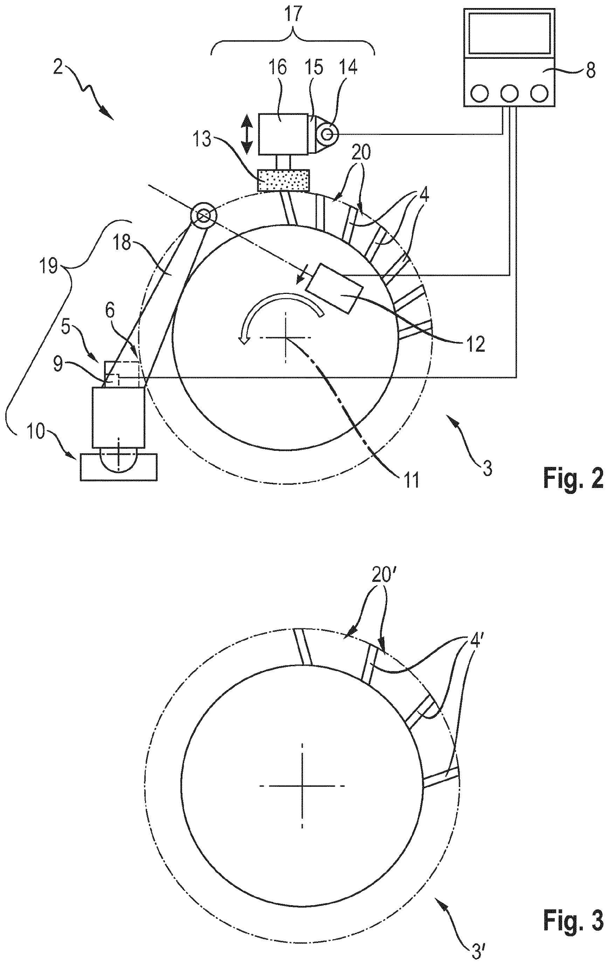

Wie in Fig. 1 zu sehen, weist das Häckselaggregat 2 eine Häckseltrommel 3 auf, die an deren Umfang mit einer Vielzahl von Messern 4 besetzt ist. Die Häckseltrommel 3 ist in der durch den Pfeil angedeuteten Drehrichtung (gemäß der Ansicht von Fig. 1 entgegen dem Uhrzeigesinn) antreibbar. Zum Antrieb dient ein von einem Antriebsmotor und einem zwischengeschalteten Getriebe (z.B. Riementrieb) gebildeter Antriebsstrang (nicht gezeigt). Der Antriebsstrang weist zweckmäßigerweise zumindest eine Kupplung auf. Das Getriebe kann feste und/oder drehzahlveränderliche Übersetzungsstufen aufweisen. Das Häckselaggregat 2 weist weiterhin eine gegenüber der rotierenden Häckseltrommel 3 ruhend gelagerte Gegenschneide 5 auf. Die Gegenschneide 5 und die Häckseltrommel 3 (insbesondere deren Messer 4) bilden zusammen einen Schneidspalt 6 (in Fig. 2 bezeichnet), an dem das dem Häckselaggregat 2 im Erntebetrieb zugeführte Erntegut 4 in Partikel gewünschter Schnittlänge gehäckselt wird.

Der Feldhäcksler 1 weist weiterhin eine Steuer-, Bedien- und Anzeigeeinrichtung 8 auf, die gemäß dem gezeigten Ausführungsbeispiel in einer Fahrerkabine des Feldhäckslers 1 angeordnet und damit für einen Bediener zugänglich ist. Erfindungsgemäß dient die Steuer-, Bedien- und Anzeigeeinrichtung 8 des Feldhäckslers 1, wie anhand von Fig. 2 noch näher zu erläutern, der Steuerung der Drehzahl n der Häckseltrommel 3 zumindest während eines Instandhaltungsvorgangs des Häckselaggregats 2 abhängig von einer Eigenschaft der Häckseltrommel 3. Die Steuer-, Bedien- und Anzeigeeinrichtung 8 steht dazu in Signalverbindung mit einem die Drehzahl n der Häckseltrommel 3 beeinflussenden Aktor. Dies kann auf für sich bekannte Weise beispielsweise der Antriebsmotor und/oder ein Getriebeglied des Feldhäckslers 1 sein.

Fig. 2 zeigt in Prinzipdarstellung ein Häckselaggregat 2 in gegenüber Fig. 1 detaillierterer Ansicht. Das Häckselaggregat 2 gemäß Fig. 2 kann vom Prinzip her in einen Feldhäcksler 1 gemäß Fig. 1 eingebaut sein. Als für den Erntebetrieb wesentliche Elemente sei zunächst auf die Häckseltrommel 3 und die Gegenschneide 5 verwiesen. Dabei ist die Häckseltrommel 3 mit einer Vielzahl von Messern 4 bestückt, die mit gleichem Abstand zueinander über den Umfang verteilt sind (aus Darstellungsgründen ist nur ein Teil der Bestückung eingezeichnet). Die Messer 4 sind lösbar an der Häckseltrommel 3 befestigt, so dass diese sich bei Verschleiß und insbesondere für eine Umrüstung der Häckseltrommel 3 demontieren lassen. In diesem Zusammenhang sei auf Fig. 3 verwiesen, welche die Häckseltrommel 3' zeigt, die beispielsweise zur Erzielung größerer Häcksellängen mit einer gegenüber Fig. 2 geringeren (halbierten) Anzahl von Messern 4' bestückt ist. Abgesehen von der unterschiedlichen Messerbestückung handelt es sich bei der Häckseltrommel 3' gemäß Fig. 3 um die gleiche wie die Häckseltrommel 3 gemäß Fig. 2. Es sei angemerkt, dass auf der Häckseltrommel 3, 3' mehrere, bevorzugt zwei Reihen von Messern 4, 4' nebeneinander (bezogen auf die Rotationsachse 11) angeordnet sind. Zudem sind die Messer 4, 4' um einen kleinen Winkel verdreht zur Rotationsachse der Häckseltrommel 3, 3' angeordnet (nicht dargestellt), um eine gleichmäßigere Antriebsbelastung der Häckseltrommel 3, 3' zu erzielen.

Zur Gewährleistung eines effizienten Zerkleinerungsvorgangs ist es unerlässlich, am Häckselaggregat 2 in bestimmten Abständen Instandhaltungsvorgänge durchzuführen. Dazu zählen bekanntermaßen das Schleifen der Messer 4 zu deren Schärfung und das Einstellen der Gegenschneide 5 auf eine präzise Abstandslage zur Häckseltrommel 3.

Das Häckselaggregat 2 weist dazu eine Schleifeinrichtung 17 auf. Diese umfasst einen am Hüllkreis der Häckselmesser 4 bewegbaren Schleifstein 13. Der Schleifstein 13 ist an einem Schlitten 16 befestigt, der sich entlang einer Schiene 15 mittels einer Stellzylindereinheit 14 parallel zur Rotationsachse 11 der Häckseltrommel 3 verschieben lässt. Der Schleifstein 13 kann so bei rotierender Häckseltrommel 3 über die gesamte wirksame Breite der Häckseltrommel 3 hin- und her bewegt werden, um die Messer 4 über deren gesamte Länge schleifen, insbesondere schärfen zu können. Zum Aufbringen der zum Schleifen der Messer 4 nötigen Reibkraft ist der Schleifstein 13 gegenüber der Häckseltrommel 3 radial vorgespannt, und somit in gewissen Grenzen radial beweglich (siehe auf- und abwärts weisender Doppelpfeil).

Wie aus Fig. 2 ersichtlich, sind die Lücken 20 zwischen aufeinanderfolgenden Messern 4 so klein, dass der Schleifstein 13 trotz seiner radialen Vorspannung (in Richtung der Rotationsachse 11) nicht in diese eindringen kann. Der Schleifstein 13 steht daher quasi ständig mit zumindest einem Messer 4 in Kontakt.

Wird nun aber, beispielsweise wie in Fig. 3, die Häckseltrommel 3' mit einer geringeren, (dort: halbierten) Anzahl von Messern 4' bestückt, so besteht beim Schleifvorgang die Gefahr, dass der Schleifstein 13 beim Schleifvorgang in die Messerlücken 20' springt, da diese (in Umfangsrichtung) deutlich größer sind als die Messerlücken 20 der Trommel 3. Auch wenn die radiale Beweglichkeit des Schleifsteins 13 begrenzt ist, entstehen durch das Springen und anschließende Anschlagen der Messer 4' an den Schleifstein 13 erhebliche Schwingungen, die zu Lärm und erhöhter Abnutzung führen.

Zur Vermeidung dieser Nachteile sorgt die Steuereinrichtung 8 dafür, während des Schleifvorgangs die Drehzahl n der Trommel 3 bzw. 3' abhängig von der jeweiligen Messerbestückung der Trommel 3, 3' so zu wählen, dass möglicherweise durch Messerlücken 20, 20' entstehende Kontaktunterbrechungen zwischen Schleifstein 13 und Messern 4, 4' von so kurzer Dauer sind, dass ein radiales Springen des Schleifsteins 13 in diese Messerlücken 20, 20' verhindert wird. Anders gesagt, gibt die Steuereinrichtung 8 abhängig vom Bestückungszustand eine Trommeldrehzahl n vor, bei welcher es der nur mit einer gewissen Trägheit bewegliche Schleifstein 13 nicht schafft, in die Messerlücken 20, 20' zu springen. Die Steuereinrichtung 8 ist dazu mit einem die Drehzahl der Trommel 3' beeinflussenden Aktor (Antriebsmotor, Getriebestellglied oder dergleichen) signalverbunden, um eine geeignete Drehzahl n der Trommel 3, 3' einzustellen. Auf diese Weise wird auch mit einer weniger bestückten Trommel 3' ein ruhiger Ablauf des Schleifvorgangs erreicht.

Das Häckselaggregat 2 weist weiterhin eine Gegenschneidstelleinrichtung 19 auf. Mit dieser lässt sich ein zwischen den Messern 4 der Häckseltrommel 3 und der Gegenschneide 5 gebildeter Schneidspalt 6 präzise einstellen. Die Gegenschneide 5 ist dazu auf für sich bekannte Weise schwenkbeweglich gegenüber einem maschinenrahmenfesten Lager 10 gelagert. Der Gegenschneide 5 sind zwei redundante ausgeführte Klopfsensoren 9 zugeordnet, mit welchen sich Schwingungen, insbesondere Klopfgeräusche, verursacht durch Anschlagen der Messer 4 an die Gegenschneide 5 erfassen lassen. Über jeweils seitlich der Gegenschneide 5 angeordnete Hebel 18 lässt sich die Gegenschneide 5 mittels je eines Stellmotors 12, der über einen Spindeltrieb je mit dem oberen Ende eines der Hebel 18 verbunden ist, in Bezug auf die Häckseltrommel 3 bewegen, um so den Schneidspalt 6 zu beeinflussen.

Da die Messsignale der Klopfsensoren 9 aufgrund der physikalischen Gegebenheiten starkem Rauschen unterliegen, ist es bei der für den Einstellvorgang erforderlichen Signalauswertung nicht einfach, Spannungsausschläge der Klopfsensoren 9 einem Messerkontakt eindeutig zuzuordnen. D.h. es kann passieren, dass ein rauschbedingter Spannungsausschlag irrtümlich einem (gar nicht stattgefundenen) Messerkontakt zugeordnet wird. In diesem Fall kann eine falsche (beispielsweise eine zu beabstandete) Einstellung der Gegenschneide 5 die Folge sein, mit deutlich nachteiligen Auswirkungen auf die Effizienz des Häckselprozesses. Die Gefahr solcher Falschzuordnungen erhöht sich durch den Einsatz unterschiedlich bestückter Trommeln 3 beträchtlich.

Zur Vermeidung dieses Nachteils sorgt die Steuereinrichtung 8 dafür, während des Vorgangs der Gegenschneideneinstellung die Drehzahl n der Trommel 3 abhängig von der jeweiligen Messerbestückung der Trommel 3 so zu wählen, dass sich an der Gegenschneide 5 für unterschiedliche Messerbestückungen (und/oder unterschiedliche Trommeltypen) eine etwa gleiche erfassbare Klopffrequenz ergibt. Damit ist also sichergestellt, dass die Klopfsensoren jeweils einer zeitlich vergleichbaren Klopffrequenz ausgesetzt sind, und zwar eben unabhängig von der Anzahl der an der Trommel 3 verbauten Messer 4. Die Signalauswertung lässt sich somit stets mit einem zeitlich gleich aufgelösten Algorithmus vornehmen, wodurch zuverlässigere Ergebnisse erzielt werden. Die Einstellung der Gegenschneide 5 kann damit genauer und zuverlässiger durchgeführt werden.

Um der Steuereinrichtung 8 die Anzahl der an der Trommel 3 angebrachten Messer 4 als Steuerungsgrundlage vorzugeben, kann im einfachen Fall eine manuelle Eingabe der Messeranzahl und/oder sonstiger Trommeleigenschaften (Trommeltyp) durch einen Maschinenbediener erfolgen. Vorteilhaft kann auch vorgesehen sein, dass der Messerbestückungszustand automatisch ermittelt wird. Dazu könnte beispielsweise zunächst die Trommel 3 mit einer bekannten Drehzahl n angetrieben werden, wobei die Steuereinrichtung 8 anhand der mittels der Klopfsensoren 9 erfassten Klopffrequenz bei bekannter Drehzahl n die Anzahl der Messer 4 an der Trommel 3 ermittelt. Nach der so erfolgten Ermittlung der Messeranzahl könnten ein Schleifvorgang und/oder ein Gegenschneideinstellvorgang (wie zuvor beschrieben) unter Berücksichtigung der ermittelten Messeranzahl und davon abhängig gesteuerter Trommeldrehzahl durchgeführt werden.

### Bezugszeichenliste

- 1: Feldhäcksler
- 2: Häckselaggregat
- 3: Häckseltrommel
- 4: Messer
- 5: Gegenschneide
- 6: Schneidspalt
- 7: Erntegut
- 8: Steuer-, Bedien- und Anzeigeeinrichtung
- 9: Klopfsensor
- 10: Lager
- 11: Rotationsachse
- 12: Stellmotor
- 13: Schleifstein
- 14: Stellzylindereinheit
- 15: Schiene
- 16: Schlitten
- 17: Schleifeinrichtung
- 18: Hebel
- 19: Gegenschneidstelleinrichtung
- 20: Messerlücke

- 3': Häckseltrommel
- 4': Messer
- 20': Messerlücke

- n: Trommeldrehzahl

## Patentansprüche

1. Landwirtschaftliche Erntemaschine (1), insbesondere Feldhäcksler mit einem Zerkleinerungsaggregat (2), das eine mit einer Vielzahl von Messern (4) bestückte Trommel (3) aufweist, die gegenüber einer ruhenden Gegenschneide (5) in Rotation versetzbar ist, um im Bereich eines von Messern (4) und Gegenschneide (5) gebildeten Schneidspalts (6) beim Erntebetrieb zugeführtes Erntegut (7) zu zerkleinern, und einer Einrichtung (8) zur Steuerung der Drehzahl (n) der Trommel (3) zumindest während eines Instandhaltungsvorgangs des Zerkleinerungsaggregats (2) abhängig von einer Eigenschaft der Trommel (3), bei der es sich um jedwede den Instandhaltungsvorgang beeinflussende Größe handelt, **dadurch gekennzeichnet, dass** es sich bei der Eigenschaft der Trommel (3) um deren Bestückungszustand mit Messern (4) handelt.

2. Landwirtschaftliche Erntemaschine (1) nach Anspruch 1, **dadurch gekennzeichnet, dass** es sich bei einer Eigenschaft der Trommel (3) um deren Eigenfrequenzen handelt.

3. Landwirtschaftliche Erntemaschine (1) nach einem der Ansprüche 1 oder 2, **dadurch gekennzeichnet, dass** bei dem Instandhaltungsvorgang eine Trommel (3) mit größerem Abstand aufeinanderfolgender Messer (4) mit einer höheren Drehzahl (n) in Rotation versetzt wird als eine Trommel (3') mit demgegenüber geringerem Abstand aufeinanderfolgender Messer (4').

4. Landwirtschaftliche Erntemaschine (1) nach einem der vorigen Ansprüche, **dadurch gekennzeichnet, dass** der Instandhaltungsvorgang die Betätigung eines der Trommel (3) zugeordneten Werkzeugs (17, 19) umfasst.

5. Landwirtschaftliche Erntemaschine (1) nach Anspruch 4, **dadurch gekennzeichnet, dass** es sich bei dem Werkzeug um eine Schleifeinrichtung (17) für die Messer (4) der Trommel (3) handelt.

6. Landwirtschaftliche Erntemaschine (1) nach Anspruch 5, **dadurch gekennzeichnet, dass** die Drehzahl (n) der Trommel (3) so gewählt ist, dass zwischen aufeinanderfolgenden Messern (4) möglicherweise durch Messerlücken (20) entstehende Kontaktunterbrechungen zwischen Schleifstein (13) und Messer (4) von so kurzer Dauer sind, dass ein radiales Springen des Schleifsteins (13) in diese Messerlücken (20) verhindert wird.

7. Landwirtschaftliche Erntemaschine (1) nach Anspruch 5 oder 6, **dadurch gekennzeichnet, dass** die für den Schleifvorgang gewählte Drehzahl (n) der Trommel (3) weiterhin abhängig vom Nutzungszustand der Messer (4) gewählt wird.

8. Landwirtschaftliche Erntemaschine (1) nach Anspruch 4, **dadurch gekennzeichnet, dass** es sich bei dem Werkzeug um eine Einrichtung (19) zum Einstellen des Abstands der Gegenschneide (5) gegenüber der Trommel (3) handelt.

9. Landwirtschaftliche Erntemaschine (1) nach Anspruch 8, **dadurch gekennzeichnet, dass** die Drehzahl (n) der Trommel (3) so gewählt ist, dass sich an der Gegenschneide (5) für unterschiedliche Messerbestückungen und/oder Trommeltypen eine etwa gleiche erfassbare Klopffrequenz ergibt.

10. Landwirtschaftliche Erntemaschine (1) nach einem der vorigen Ansprüche, **gekennzeichnet durch** eine Einrichtung (8), die betreibbar ist, bei einer bekannten Drehzahl (n) der Trommel (3) anhand einer durch Messer (4) verursachten Klopffrequenz die Anzahl der an der Trommel (3) angebrachten Messer (4) zu ermitteln, um diese für einen Instandhaltungsvorgang verfügbar zu machen.

## Claims

1. An agricultural harvester (1), in particular a forage harvester, comprising a chopping assembly (2) having a drum (3) which is equipped with a plurality of knives (4) and which can be set in rotation in relation to a stationary shear bar (5) in order to chop crop material (7) which is fed in the harvesting operation in the region of a cutting gap (6) formed by knives (4) and shear bar (5), and a device (8) for controlling the rotary speed (n) of the drum (3) at least during a maintenance operation of the chopping assembly (2) in dependence on a property of the drum (3) which is any parameter that influences the maintenance operation, **characterised in that** the property of the drum (3) is its state of equipment with knives (4).

2. An agricultural harvester (1) according to claim 1 **characterised in that** a property of the drum (3) is the natural frequencies thereof.

3. An agricultural harvester (1) according to one of claims 1 and 2 **characterised in that** in the maintenance operation a drum (3) with a greater spacing between successive knives (4) is set in rotation at a higher rotary speed (n) than a drum (3') with a comparatively smaller spacing between successive knives (4').

4. An agricultural harvester (1) according to one of the preceding claims **characterised in that** the maintenance operation includes the actuation of a tool (17, 19) associated with the drum (3).

5. An agricultural harvester (1) according to claim 4 **characterised in that** the tool is a grinding device (7) for the knives (4) of the drum (3).

6. An agricultural harvester (1) according to claim 5 **characterised in that** the rotary speed (n) of the drum (3) is so selected that interruptions in contact between the grinding stone (13) and a knife (4), that possibly occur due to knife gaps (20) between successive knives (4) is of such short duration that radial jumping of the grinding stone (13) into said knife gaps (20) is prevented.

7. An agricultural harvester (1) according to claim 5 or claim 6 **characterised in that** the rotary speed (n) of the drum (3), that is selected for the grinding operation, is further selected to be dependent on the state of wear of the knives (4).

8. An agricultural harvester (1) according to claim 4 **characterised in that** the tool is a device (19) for adjusting the spacing of the shear bar (5) with respect to the drum (3).

9. An agricultural harvester (1) according to claim 8 **characterised in that** the rotary speed (n) of the drum (3) is so selected that an approximately identical detectable knocking frequency occurs at the shear bar (5) for different knife equipments and/or drum types.

10. An agricultural harvester (1) according to one of the preceding claims **characterised by** a device (8) which is operable to ascertain the number of knives (4) mounted to the drum (3) at a known rotary speed (n) of the drum (3) by means of a knock frequency caused by knives (4) in order to make said number available for a maintenance operation.

## Revendications

1. Machine agricole de récolte (1), en particulier ensileuse comprenant un organe de broyage (2), lequel comporte un rotor (3) qui est équipé d'une pluralité de couteaux (4) et peut être mis en rotation par rapport à une contre-lame fixe (5) afin de broyer du produit récolté (7) amené, en mode de récolte, dans la zone d'un interstice de coupe (6) formé par les couteaux (4) et la contre-lame (5), et comprenant un équipement (8) pour commander la vitesse de rotation (n) du rotor (3) au moins pendant une opération de maintenance de l'organe de broyage (2) en fonction d'une propriété du rotor (3), laquelle est une grandeur quelconque influençant l'opération de maintenance, **caractérisée en ce que** la propriété du rotor (3) est constituée par son état d'équipement en couteaux (4).

2. Machine agricole de récolte (1) selon la revendication 1, **caractérisée en ce qu'**une propriété du rotor (3) est constituée par ses fréquences propres.

3. Machine agricole de récolte (1) selon une des revendications 1 ou 2, **caractérisée en ce que**, lors de l'opération de maintenance, un rotor (3) avec des couteaux (4) se succédant à une distance assez grande est mis en rotation à une vitesse de rotation (n) supérieure à celle d'un rotor (3') avec des couteaux (4') se succédant à une distance comparativement assez réduite.

4. Machine agricole de récolte (1) selon une des revendications précédentes, **caractérisée en ce que** l'opération de maintenance comprend l'actionnement d'un outil (17, 19) associé au rotor (3).

5. Machine agricole de récolte (1) selon la revendication 4, **caractérisée en ce que** l'outil est constitué par un équipement d'affûtage (17) pour les couteaux (4) du rotor (3).

6. Machine agricole de récolte (1) selon la revendication 5, **caractérisée en ce que** la vitesse de rotation (n) du rotor (3) est choisie de façon que des interruptions de contact entre la pierre à affûter (13) et les couteaux (4), éventuellement dues à des intervalles entre couteaux (20) entre des couteaux successifs (4), soient d'une durée suffisamment courte pour empêcher un saut radial de la pierre à affûter (13) dans ces intervalles entre couteaux (20).

7. Machine agricole de récolte (1) selon la revendication 5 ou 6, **caractérisée en ce que** la vitesse de rotation (n) du rotor (3) choisie pour l'opération d'affûtage est toujours choisie en fonction de l'état d'usure des couteaux (4).

8. Machine agricole de récolte (1) selon la revendication 4, **caractérisée en ce que** l'outil est constitué par un équipement (19) pour régler la distance de la contre-lame (5) par rapport au rotor (3).

9. Machine agricole de récolte (1) selon la revendication 8, **caractérisée en ce que** la vitesse de rotation (n) du rotor (3) est choisie de façon à obtenir, au niveau de la contre-lame (5), une fréquence de cognement détectable sensiblement égale pour des équipements en couteaux différents.

10. Machine agricole de récolte (1) selon une des revendications précédentes, **caractérisée par** un équipement (8) qui est utilisable pour déterminer, à une vitesse de rotation connue (n) du rotor (3), à l'aide d'une fréquence de cognement due à des couteaux (4), le nombre de couteaux (4) montés sur le rotor (3) afin de rendre ceux-ci disponibles pour une opération de maintenance.
